# FASCICULE DE BREVET EUROPEEN

(11) **EP 2 916 220 B1**
(45) Date de publication et mention de la délivrance du brevet: **15.01.2020**
(21) Numéro de dépôt: 15155970.5
(22) Date de dépôt: 20.02.2015
(51) Int. Cl.: G06F 8/60, G06F 15/16, G06F 11/00, H02H 7/26

(54) **Système électronique comprenant des dispositifs électroniques, disjoncteur comportant un tel système, procédé de génération d'un indicateur d'écart en cas d'incompatibilité entre dispositifs et produit programme d'ordinateur associé**
Elektronisches System, das elektronische Vorrichtungen umfasst, Schutzschalter, der ein solches System umfasst, Verfahren zur Erzeugung eines Abweichungsanzeigers im Fall einer Inkompatibilität zwischen den Vorrichtungen, und entsprechendes Computerprogramm
Electronic system comprising electronic devices, circuit breaker comprising such a system, method for generating a deviation indicator in the event of an incompatibility between devices and related computer program product

(30) Priorité: 07.03.2014 FR 1451908
(43) Date de publication de la demande: 09.09.2015
(73) Titulaire: Schneider Electric Industries SAS, 92500 Rueil-Malmaison (FR)
(72) Inventeur: Michel, Julien, 38050 Grenoble Cedex 09 (FR)
(74) Mandataire: Lavoix

(56) Documents cités:
- EP-A2- 0 498 130
- WO-A1-99/66409
- WO-A1-2005/106605
- US-B1- 6 898 768

## Description

La présente invention concerne un système électronique comprenant un ensemble de dispositifs électroniques. Chaque dispositif électronique comporte une mémoire et un module de communication avec un ou plusieurs autres dispositifs de l'ensemble. Le système comprend au moins un module de vérification de la compatibilité de chaque dispositif avec le ou les autres dispositifs complémentaires avec lesquels ledit dispositif est apte à communiquer, et au moins un module de génération d'au moins un indicateur d'écart lorsqu'une incompatibilité entre deux dispositifs est détectée.

La présente invention concerne également un disjoncteur électrique comprenant une unité de déclenchement et un tel système électronique.

La présente invention concerne également un procédé de génération d'au moins un indicateur d'écart pour un dispositif électronique lorsqu'une incompatibilité avec au moins un autre dispositif d'un système électronique est détectée.

La présente invention concerne également un produit programme d'ordinateur comportant des instructions logicielles, qui, lorsqu'elles sont exécutées par un ordinateur, mettent en oeuvre un tel procédé de génération.

L'invention concerne notamment le domaine des systèmes de produits communicants qui deviennent de plus en plus modulaires afin de répondre aux besoins de flexibilité des utilisateurs, dans lesquels les produits communicants sont mis à jour régulièrement, notamment en fonction des exigences des utilisateurs. Il est alors nécessaire de vérifier la compatibilité des produits communicants d'un même système, afin de pouvoir gérer d'éventuels problèmes d'incompatibilité entre deux produits communicants respectifs.

On connaît du document US 2006/0130073 A1 un système du type précité. Le système comprend un premier dispositif équipé d'un premier processeur et d'une première mémoire et un deuxième dispositif équipé d'un deuxième processeur et d'une deuxième mémoire. Le deuxième dispositif est un dispositif de contrôle du premier dispositif, la deuxième mémoire comportant un logiciel de base (de l'anglais *driver*) pour contrôler le premier dispositif, et une base de données comportant un numéro d'identification du logiciel de base, ainsi qu'un numéro d'identification d'un logiciel applicatif stocké dans la première mémoire.

Le deuxième processeur est adapté pour comparer lesdits numéros d'identification, afin de détecter une éventuelle incompatibilité, et de lancer, le cas échéant, une mise à jour du logiciel la nécessitant. Les informations relatives à l'identification des différents logiciels, afin de connaître leurs versions respectives, sont centralisées dans la base de données stockée dans la deuxième mémoire. Elles sont susceptibles d'être transmises au premier processeur, afin qu'il effectue le cas échéant lui-même la comparaison des numéros d'identification.

WO 2005/106605 A1 décrit un système de bus dans un véhicule motorisé, le système comprenant plusieurs dispositifs de commande, où chaque dispositif de commande vérifie sa compatibilité avec les autres dispositifs de commande à l'aide d'une table de référence de compatibilité.

US 6,898,768 B1 concerne également la vérification de compatibilité de différents composants dans un système de communication, à l'aide d'une matrice de compatibilité.

WO 99/66409 A1 décrit un système informatique comportant plusieurs modules, chaque module comportant une liste de capacités et une liste d'exigences, chaque module comportant une liste de capacités et une liste d'exigences, ces listes étant utilisées pour effectuer une vérification de compatibilité avec les autres modules.

EP 0 498 130 A2 concerne également la vérification de compatibilité de différents composants d'un système.

Toutefois, la vérification de compatibilité au sein de tels systèmes est relativement complexe, notamment lors de l'ajout d'un nouveau dispositif avec la mise à jour nécessaire de la base de données centralisée.

Le but de l'invention est donc proposer un système plus évolutif dans lequel la vérification de compatibilité entre dispositifs reste simple de mise en œuvre, même lors de l'ajout d'un nouveau dispositif dans le système.

A cet effet, l'invention a pour objet un système électronique selon la revendication 1.

Avec le système électronique selon l'invention, chaque dispositif comprend une table de compatibilité avec un ou des autres dispositifs complémentaires, les dispositifs complémentaires étant les dispositifs avec lesquels ledit dispositif est apte à communiquer, chaque table de compatibilité comportant au moins un numéro de version minimale requise pour chacun dudit ou desdits autres dispositifs complémentaires. Autrement dit, les données permettant d'effectuer la vérification de compatibilité entre dispositifs complémentaires sont réparties entre les dispositifs, et ne sont pas, contrairement au système de l'état de la technique, centralisées dans un dispositif maître.

Suivant d'autres aspects avantageux de l'invention, le système électronique comprend une ou plusieurs des caractéristiques suivantes, prises isolément ou selon toutes les combinaisons techniquement possibles, selon les revendications 2 à 6.

L'invention a également pour objet un disjoncteur électrique comprenant une unité de déclenchement et un système électronique, dans lequel le système électronique est tel que défini ci-dessus.

L'invention a également pour objet un procédé de génération d'au moins un indicateur d'écart, selon la revendication 8.

L'invention a également pour objet un produit programme d'ordinateur comportant des instructions logicielles qui, lorsqu'elles sont exécutées par un ordinateur, mettent en oeuvre un procédé, tel que défini ci-dessus, de génération d'au moins un indicateur d'écart.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une représentation très schématique d'un disjoncteur comprenant un système électronique selon l'invention, le système électronique comportant quatre dispositifs électroniques,
- la figure 2 est un organigramme d'un procédé de génération d'au moins un indicateur d'écart selon l'invention, le procédé comprenant la vérification de la compatibilité d'un dispositif donné avec un ou des autres dispositifs complémentaires,
- les figures 3 et 4 sont des organigrammes d'étapes mises en œuvre lors de la vérification précitée de la compatibilité, et
- les figures 5 à 7 sont des représentations schématiques d'échanges de données entre dispositifs électroniques du système de la figure 1, selon différents exemples de réalisation.

Par convention, dans la suite de la description, un module s'entend au sens large, et est synonyme de moyen.

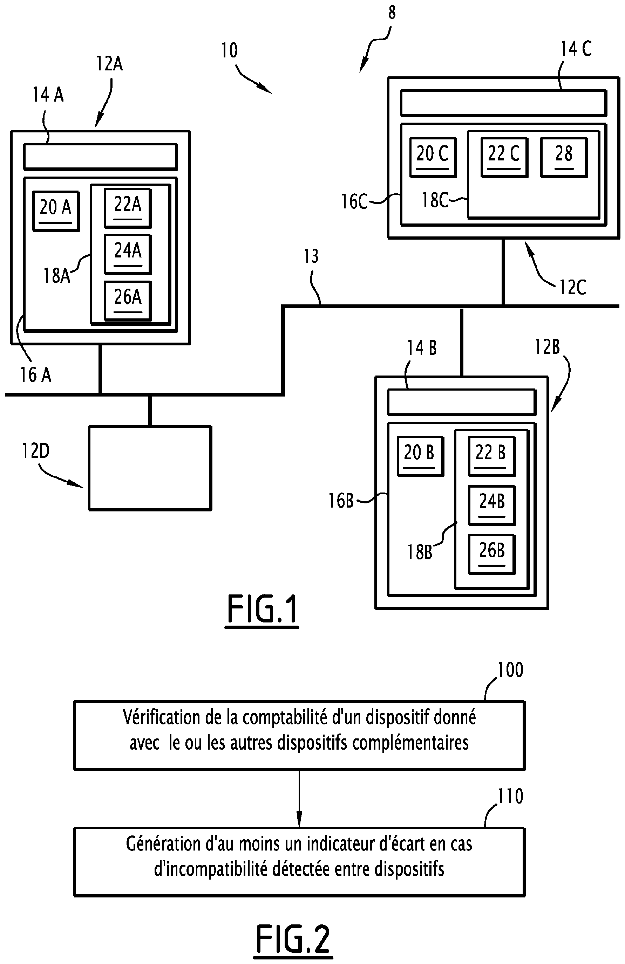

Sur la figure 1, un disjoncteur électrique 8 comprend une unité de déclenchement, non représentée, et un système électronique 10. L'unité de déclenchement est connue en soi, et n'est pas décrite plus en détail.

Le système électronique 10 comprend quatre dispositifs électroniques 12A, 12B, 12C, 12D, à savoir un premier dispositif 12A, un deuxième dispositif 12B, un troisième dispositif 12C et un quatrième dispositif 12D, et un bus de communication 13 reliant entre eux les dispositifs électroniques 12A, 12B, 12C, 12D.

Les dispositifs électroniques 12A, 12B, 12C, 12D sont par exemple un dispositif d'interface homme-machine, également noté FDM (de l'anglais *Front Display Module*), un dispositif d'interface réseau, par exemple un dispositif d'interface avec un réseau Modbus, également noté IFM (de l'anglais *InterFace Modbus*), un dispositif d'interface avec l'unité de déclenchement du disjoncteur 8, tel qu'un dispositif noté BCM (de l'anglais *Breaker Control Module*) ou encore un dispositif noté BSCM (de l'anglais *Breaker Status Control Module*)*.* Les dispositifs électroniques 12A, 12B, 12C, 12D sont également par exemple un dispositif de maintenance, également noté UTA (de l'anglais *USB Tool Adaptor)* et un dispositif d'entrées/sorties, également noté I/O Module (de l'anglais *Input*/*Output Module)* et destiné à délivrer en sortie des informations relatives au système et à acquérir en entrée des informations concernant le système.

Les dispositifs électroniques 12A, 12B, 12C, 12D sont de préférence choisis parmi le groupe consistant en : un dispositif d'interface homme-machine FDM, un dispositif d'interface réseau IFM, un dispositif d'interface BCM ou BSCM avec l'unité de déclenchement du disjoncteur, un dispositif de maintenance UTA, un dispositif d'entrées/sorties et une unité de déclenchement comportant des moyens de communication.

Le premier dispositif électronique 12A comporte un premier module 14A de communication avec un ou plusieurs autres dispositifs 12B, 12C, 12D de l'ensemble. Le premier dispositif électronique 12A comporte également une première unité de traitement d'informations 16A formée par exemple d'une première mémoire 18A et d'un premier processeur 20A associé à la première mémoire.

Par convention, dans la suite de la description, les dispositifs avec lesquels un dispositif donné est apte à communiquer sont appelés dispositifs complémentaires. Autrement dit, un dispositif donné n'est pas supposé être compatible avec tous les autres dispositifs du système, et les dispositifs avec lesquels un dispositif donné est censé être compatible sont les dispositifs complémentaires.

Le deuxième dispositif électronique 12B, respectivement le troisième dispositif électronique 12C et respectivement le quatrième dispositif électronique 12D comportent les mêmes éléments que le premier dispositif électronique 12A décrit précédemment, en remplaçant à chaque fois premier par deuxième, respectivement par troisième et respectivement par quatrième, éléments pour lesquels les références sont obtenues en remplaçant la lettre A par la lettre B, respectivement par la lettre C et respectivement par la lettre D. Sur la figure 1, les éléments contenus dans le quatrième dispositif électronique 12D n'ont pas été représentés par souci de simplification des dessins.

Chaque dispositif électronique 12A, 12B, 12C, 12D comporte une ou plusieurs fonctions matérielle et/ou logicielle, non représentées.

Le bus de communication 13 est par exemple un bus filaire, interne au disjoncteur 8 et reliant les différents dispositifs électroniques 12A, 12B, 12C, 12D. Le bus 13 est adapté pour permettre un échange de données entre ces dispositifs 12A, 12B, 12C, 12D. Les modules de communication 14A, 14B, 14C, 14D sont alors des modules d'interfaçage avec le bus interne de communication 13.

En variante, non représentée, le bus de communication 13 est en forme d'une liaison radioélectrique de données, et les modules de communication 14A, 14B, 14C, 14D sont alors des modules radioélectriques de communication.

On entend par fonction matérielle, toute fonction mise en œuvre par un composant matériel (de l'anglais *hardware*), c'est-à-dire par un composant électronique ou par un ensemble de composants électroniques. Chaque composant électronique est, par exemple, une mémoire électronique adaptée pour stocker des données, un composant d'entrée/sortie, un composant d'interface avec une liaison de communication, telle qu'une liaison série, une liaison USB, une liaison Ethernet, une liaison Wifi etc. A titre d'exemple supplémentaire, un composant électronique peut être un composant logique programmable, également appelé FPGA (de l'anglais *Field Programmable Gate Array*), ou encore un circuit intégré dédié, également appelé ASIC (de l'anglais *Application Specific Integrated Circuit*) ou tout autre composant électronique, programmable ou non.

On entend par fonction logicielle, toute fonction mise en œuvre par un composant logiciel, qu'il s'agisse d'un logiciel de base (de l'anglais *firmware*) ou encore d'un logiciel applicatif (de l'anglais *software*). Une fonction logicielle s'entend ainsi au sens large comme un ensemble d'instructions logicielles aptes à mettre en œuvre ladite fonction lorsqu'elles sont exécutées par un processeur.

Selon l'invention, chaque mémoire 18A, 18B, 18C comporte une table 22A, 22B, 22C de compatibilité avec ledit ou lesdits autres dispositifs complémentaires, chaque table de compatibilité 22A, 22B, 22C comportant au moins un numéro de version minimale requise pour chacun dudit ou desdits autres dispositifs complémentaires.

Chaque mémoire 18A, 18B, 18C comporte en outre un numéro de version, non représenté, de chaque fonction matérielle ou logicielle intégrée dans le dispositif électronique 12A, 12B, 12C, 12D qui comprend ladite mémoire 18A, 18B, 18C.

La première mémoire 18A est apte à stocker un logiciel 24A de vérification de la compatibilité du premier dispositif 12A avec le ou les autres dispositifs complémentaires avec lesquels ledit dispositif est apte à communiquer, et un logiciel 26A de génération d'au moins un indicateur d'écart lorsqu'une incompatibilité entre deux dispositifs est détectée. Le premier processeur 20A est adapté pour exécuter les logiciels 24A, 26A stockés dans la première mémoire 18A.

La deuxième mémoire 18B est apte à stocker les mêmes logiciels que la première mémoire 18A, logiciels pour lesquels les références sont obtenues en remplaçant la lettre A par la lettre B. Le deuxième processeur 20B est, de manière analogue, adapté pour exécuter les logiciels 24B, 26B stockés dans la deuxième mémoire 18B.

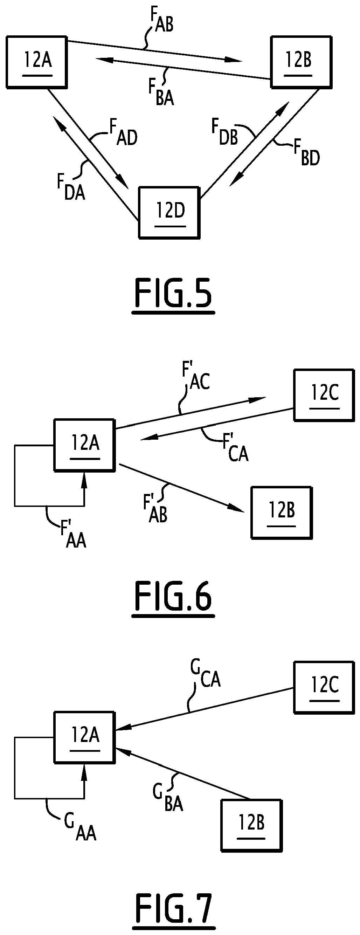

La troisième mémoire 18C n'est pas destinée à stocker un logiciel de vérification et un logiciel de génération, mais est apte à stocker un logiciel 28 de délégation de la vérification de compatibilité à un autre dispositif, tel que le premier dispositif 12A comme cela sera décrit plus en détail en regard de la figure 6. Cet autre dispositif, auquel est déléguée la vérification comporte un module de vérification 24A correspondant, et le logiciel de délégation 28 est adapté pour transmettre, audit module de vérification 24A, les valeurs contenues dans la table de compatibilité 22C du dispositif qui comporte ledit module de délégation 28.

Le troisième processeur 20C est adapté pour exécuter le logiciel 28 stocké dans la troisième mémoire 18C. Le logiciel de délégation 28 forme alors respectivement un module de délégation. En variante, le module de délégation 28 est réalisé sous forme de composant logique programmable ou encore sous forme de circuit intégré dédié.

La quatrième mémoire est apte à stocker les mêmes logiciels que la première mémoire 18A, logiciels pour lesquels les références sont obtenues en remplaçant la lettre A par la lettre D. Le quatrième processeur est, de manière analogue, adapté pour exécuter les logiciels stockés dans la quatrième mémoire.

Chaque table de compatibilité 22A, 22B, 22C comporte, pour le dispositif associé 12A, 12B, 12C, 12D dans la mémoire duquel elle est stockée, au moins un numéro de version minimale requise pour chacun dudit ou desdits autres dispositifs complémentaires de ce dispositif associé.

Chaque table de compatibilité 22A, 22B, 22C est prédéterminée, c'est-à-dire prédéfinie. Chaque table de compatibilité 22A, 22B, 22C est stockée dans la mémoire 18A, 18B, 18C du dispositif correspondant, de préférence avant que le dispositif correspondant 12A, 12B, 12C, 12D soit inséré dans le système électronique.

En complément, chaque table de compatibilité 22A, 22B, 22C est mise à jour lorsqu'au moins une fonction parmi la ou les fonctions matérielle(s) et logicielle(s) du dispositif associé 12A, 12B, 12C, 12D est mise à jour. Cela permet alors d'ajouter ou de retirer un ou plusieurs numéros de version minimale requise lors de cette mise à jour, c'est-à-dire de manière dynamique.

Lorsqu'un dispositif électronique 12A, 12B, 12C, 12D comporte au moins une fonction matérielle, la table de compatibilité correspondante 22A, 22B, 22C comporte, pour la ou chaque fonction matérielle, un numéro de version minimale requise pour chacun dudit ou desdits autres dispositifs complémentaires de ce dispositif électronique et pour la fonction matérielle concernée.

Lorsqu'un dispositif électronique 12A, 12B, 12C, 12D comporte au moins une fonction logicielle, la table de compatibilité correspondante 22A, 22B, 22C comporte, pour la ou chaque fonction logicielle, un numéro de version minimale requise pour chacun dudit ou desdits autres dispositifs complémentaires de ce dispositif électronique et pour la fonction logicielle concernée.

En variante, le numéro de version minimale requise correspond directement à une version du dispositif, et chaque table de compatibilité 22A, 22B, 22C comporte un seul numéro de version minimale requise pour chacun dudit ou desdits autres dispositifs complémentaires du dispositif comportant ladite table 22A, 22B, 22C. Autrement dit, selon cette variante, la compatibilité est gérée globalement au niveau du dispositif, et non individuellement au niveau de chacune des fonctions intégrées dans le dispositif.

En complément facultatif, plusieurs niveaux de compatibilité sont associés à chaque dispositif 12A, 12B, 12C, 12D du système, et chaque table de compatibilité correspondante 22A, 22B, 22C comporte, pour chaque niveau de compatibilité, un numéro de version minimale requise pour chacun dudit ou desdits autres dispositifs complémentaires. Lorsque plusieurs niveaux de compatibilité sont associés à un dispositif comportant plusieurs fonctions matérielles et/ou logicielles, la table de compatibilité correspondante 22A, 22B, 22C comporte un numéro de version minimale requise pour chaque niveau de compatibilité et pour chaque fonction matérielle ou logicielle.

En variante de ce complément facultatif, lorsque le numéro de version minimale requise correspond directement à un numéro de version du dispositif et que plusieurs niveaux de compatibilité sont prévus, chaque table de compatibilité correspondante 22A, 22B, 22C comporte, pour chaque niveau de compatibilité, un seul numéro de version minimale requise pour chacun dudit ou desdits autres dispositifs complémentaires.

A titre d'exemple correspondant à la figure 5, la table de compatibilité correspondante 22A pour le premier dispositif 12A est sous forme du tableau 1 suivant :

**Tableau 1**

| | | Version FW requise | | Version HW requise | |
|---|---|---|---|---|---|
| | | Dispositif 12B | Dispositif 12C | Dispositif 12B | Dispositif 12C |
| Niveau d'écart | Fort | 0.1.5 | 2.2.0 | 001 | - |
| | Moyen | 1.0.0 | - | 003 | - |
| | Faible | 1.2.0 | 4.0.0 | 010 | 002 |

| | | | | | |
|---|---|---|---|---|---|
| où version FW requise représente le numéro de version minimale requise pour la fonction logicielle de base pour chacun des deux autres dispositifs complémentaires, à savoir le deuxième dispositif 12B et le troisième dispositif 12C, et suivant trois niveaux de d'écart, tel qu'un niveau fort d'écart, un niveau moyen d'écart et un niveau faible d'écart, et où version HW requise représente le numéro de version minimale requise pour la fonction matérielle pour chacun des deux autres dispositifs complémentaires 12B, 12C et suivant les trois niveaux de d'écart. | | | | | |

L'homme du métier observera que le niveau d'écart et le niveau de compatibilité sont des notions liées, en particulier inversement proportionnelles. Plus le niveau d'écart est élevé, plus le niveau de compatibilité est faible. Autrement dit, le tableau 1 est équivalent au tableau 2 suivant :

**Tableau 2**

| | | Version FW requise | | Version HW requise | |
|---|---|---|---|---|---|
| | | Dispositif 12B | Dispositif 12C | Dispositif 12B | Dispositif 12C |
| Niveau de compatibilité | Faible | 0.1.5 | 2.2.0 | 001 | - |
| | Moyen | 1.0.0 | - | 003 | - |
| | Fort | 1.2.0 | 4.0.0 | 010 | 002 |

Dans l'exemple de réalisation décrit, les versions sont numérotées de façon incrémentale, et une version donnée, telle qu'une version d'une fonction matérielle ou logicielle, est alors compatible avec la version minimale requise pour un niveau de compatibilité choisi à partir du moment où le numéro associé à cette version donnée est supérieur ou égal au numéro de la version minimale requise.

Lorsque la numérotation de version comporte plusieurs chiffres séparés les uns des autres par des points '.', comme par exemple trois chiffres séparés par deux points pour la version logicielle de base dans les tableaux précédents, un numéro de version est supérieur à un autre numéro de version si le premier chiffre en partant de la gauche, également appelé chiffre de poids fort, est supérieur au chiffre de poids fort correspondant de l'autre version, ou bien tant que les chiffres de même poids des deux versions sont égaux, si le chiffre de poids inférieur suivant est supérieur au chiffre de poids inférieur correspondant de l'autre version.

En variante non représentée, les versions sont numérotées de façon décrémentale, et une version donnée est alors compatible avec la version minimale requise pour un niveau de compatibilité choisi à partir du moment où le numéro associé à cette version donnée est inférieur ou égal au numéro de la version minimale requise.

En variante encore, les versions sont numérotées suivant une autre loi mathématique d'ordre, et une version donnée est alors compatible avec la version minimale requise pour un niveau de compatibilité choisi à partir du moment où le numéro associé à cette version donnée est supérieur ou égal, selon cette loi d'ordre, au numéro de la version minimale requise.

Les logiciels de vérification 24A, 24B et le logiciel de génération 26A, 26B forment chacune respectivement un module de vérification et un module de génération. En variante, les modules de vérification 24A, 24B et les modules de génération 26A, 26B sont réalisés sous forme de composants logiques programmables ou encore sous forme de circuits intégrés dédiés.

Chaque module de vérification 24A, 24B est intégré dans un dispositif électronique 12A, 12B, 12D respectif. Chaque module de vérification 24A, 24B est adapté pour comparer, pour le dispositif 12A, 12B, 12D associé, le numéro de version de chacun du ou des autres dispositifs complémentaires dudit dispositif avec le numéro de version minimale requise correspondant, ce numéro de version minimale requise étant contenu dans la table de compatibilité 22A 22B, comme décrit précédemment. Ce numéro de version minimale requise dépend de la fonction considérée parmi les fonctions matérielle(s) et logicielle(s) lorsque plusieurs fonctions sont prises en compte dans la table de compatibilité 22A 22B, ainsi que d'un éventuel niveau de compatibilité, lorsque plusieurs niveaux de compatibilité sont associés audit dispositif.

Chaque module de vérification 24A, 24B est alors adapté pour vérifier que le numéro de version de chacun du ou des autres dispositifs complémentaires est supérieur ou égal au numéro de version minimale requise correspondant selon la loi d'ordre choisie pour la numérotation. Autrement dit, chaque module de vérification 24A, 24B est adapté pour vérifier que la version de chacun du ou des autres dispositifs complémentaires est au moins aussi récente que la version minimale requise correspondante lorsque la numérotation de version évolue avec le temps.

Cette vérification est effectuée par chaque module de vérification 24A, 24B pour chaque fonction considérée parmi la ou les fonctions matérielle(s) et logicielle(s) et pour chaque niveau de compatibilité choisi indépendamment pour chaque fonction considérée.

Dans l'exemple de réalisation décrit, le troisième dispositif 12C ne comporte pas de module de vérification et comporte alors le module de délégation 28.

En variante, chaque dispositif électronique comporte son propre module de vérification. Autrement dit, chaque vérification de compatibilité est effectuée de manière autonome par chaque dispositif respectif, sans passer par un module de délégation.

Chaque module de génération 26A, 26B est adapté pour générer un indicateur unitaire d'écart pour chaque dispositif 12A, 12B, 12D associé ayant une incompatibilité avec au moins un autre dispositif complémentaire, comme cela sera décrit plus en détail par la suite en regard des figures 5 et 6.

En outre, au moins un module de génération 26A, 26B est adapté pour générer un indicateur global d'écart dès que deux dispositifs complémentaires sont incompatibles, comme cela sera décrit plus en détail par la suite en regard de la figure 7.

Le module de délégation 28 est adapté pour transmettre, à un autre dispositif comportant un module de vérification, les valeurs contenues dans la table de compatibilité 22C du dispositif qui comporte ledit module de délégation 28, l'autre dispositif étant par exemple le premier dispositif 12A comportant le module de vérification 26A dans l'exemple de la figure 6.

Le module de délégation 28 permet alors de vérifier la ou les compatibilités correspondantes pour le dispositif associé 12C, puis de générer l'éventuel indicateur unitaire d'écart pour le dispositif associé 12C, lorsque ce dispositif associé 12C ne comprend pas de module de vérification, ni de module de génération.

Le fonctionnement du système électronique 10 selon l'invention va désormais être expliqué en regard des organigrammes des figures 2 à 4 illustrant le procédé de génération selon l'invention.

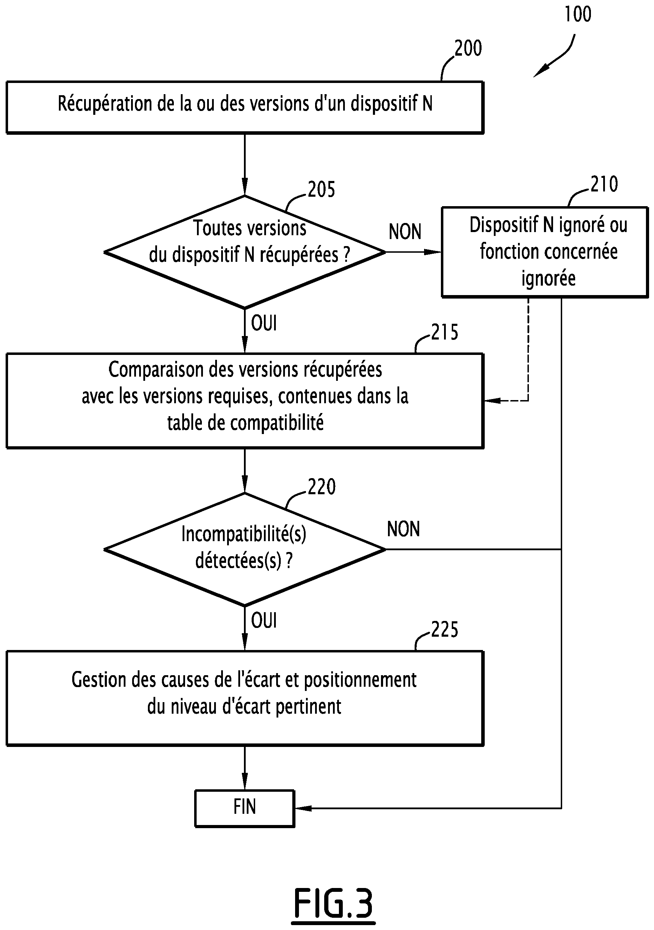

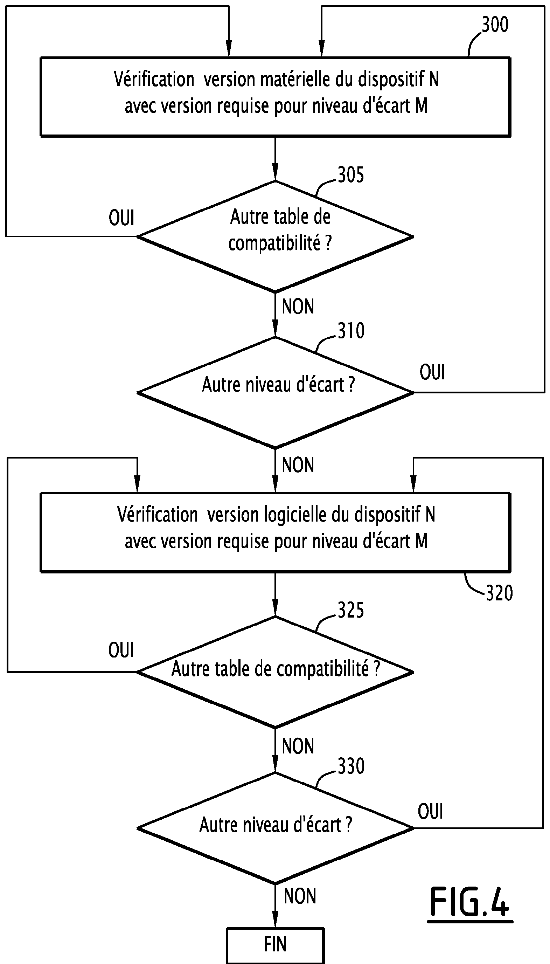

Le procédé de génération comporte une étape 100 au cours de laquelle la vérification de compatibilité d'un dispositif 12A, 12B, 12C, 12D donné avec le ou les autres dispositifs complémentaires est effectuée. Cette vérification est effectuée à l'aide de la table de compatibilité 22A, 22B, 22C contenue dans ce dispositif, le numéro de version de chacun dudit ou desdits autres dispositifs complémentaires étant comparé avec le numéro de version minimale requise correspondant, comme cela sera décrit plus en détail par la suite en regard des figures 3 et 4.

Le procédé de génération comporte ensuite l'étape suivante 110, lors de laquelle au moins un indicateur d'écart, tel qu'un indicateur unitaire correspondant ou l'indicateur global, est généré pour le dispositif électronique si une incompatibilité avec au moins un autre dispositif complémentaire est détectée.

L'étape de vérification comporte une étape initiale 200 de récupération du ou des numéros de versions d'un dispositif complémentaire, ce dispositif complémentaire étant numéroté N dans l'exemple de l'organigramme de la figure 3.

Après avoir récupéré un ou plusieurs numéros de versions du dispositif complémentaire N, le module de vérification 24A, 24B du dispositif mettant en œuvre le procédé selon l'invention détermine, lors de l'étape 205, si tous les numéros attendus des versions associées au dispositif complémentaire N ont bien été récupérés.

Si tous ces numéros attendus de versions n'ont pas été récupérés, alors le module de vérification 24A, 24B ignore le dispositif complémentaire N lors de l'étape 210, ou en variante, ignore seulement la fonction matérielle ou logicielle concernée, tout en n'interdisant pas le fonctionnement de la ou des autres fonctions matérielles et/ou logicielles.

Si tous ces numéros attendus de versions ont bien été récupérés, alors ils sont comparés, lors de l'étape 215 et par le module de vérification 24A, 24B, avec les numéros de versions minimales requises contenus dans la table de compatibilité correspondante 22A, 22B, comme cela sera décrit plus en détail par la suite à l'aide de l'organigramme de la figure 4.

En variante, représentée en traits pointillés sur la figure 3, si certains numéros attendus de version ont été récupérés, et même si tous les numéros attendus de version n'ont pas été récupérés, ce qui engendre une réponse négative au test de l'étape 205, alors le procédé passe malgré tout à l'étape 215 afin que les numéros de version récupérés soient comparés, par le module de vérification 24A, 24B, avec les numéros correspondants de versions minimales requises contenus dans la table de compatibilité correspondante 22A, 22B.

Lors de l'étape suivante 220, le module de vérification 24A, 24B détermine si une ou plusieurs incompatibilités ont été détectées, c'est-à-dire si un ou plusieurs numéros de versions récupérés sont strictement inférieurs, au sens de la loi d'ordre de la numérotation de version, aux numéros de versions minimales requises contenus dans la table de compatibilité correspondante 22A, 22B.

Si aucune incompatibilité n'est détectée lors de l'étape 220, alors le procédé est terminé.

Si au contraire au moins une incompatibilité est détectée, alors la ou les causes ayant entraîné cet écart de version conduisant à une incompatibilité sont gérées lors de l'étape 225 et un niveau d'écart, c'est-à-dire un indicateur d'écart est généré. La gestion des causes de l'écart de version conduit par exemple à planifier ou à effectuer de manière automatique une mise à jour de la version en écart par rapport à la version minimale requise. La gestion des causes de l'écart de version conduit par exemple également, tant que la mise à jour n'a pas été effectuée, à désactiver partiellement ou complètement chaque fonction concernée par la ou les incompatibilités détectées, ainsi qu'à signaler chaque incompatibilité à l'utilisateur. L'étape de gestion des causes et de positionnement du ou des indicateurs d'écart correspond alors à l'étape 110 de la figure 2. Le procédé s'achève à l'issue de cette étape 225.

L'organigramme de la figure 4 représente de manière plus détaillée l'étape de comparaison 215 dans le cas où le dispositif correspondant 12A, 12B, 12C, 12D comporte à la fois au moins une fonction matérielle et au moins une fonction logicielle.

Lors de l'étape 300, le module de vérification 24A, 24B du dispositif mettant en œuvre le procédé commence par vérifier le numéro de version matérielle du dispositif complémentaire N, c'est-à-dire le numéro de version de la fonction matérielle du dispositif N, avec le numéro de version minimale requise pour un niveau d'écart M. Cette vérification consiste à déterminer si le numéro de version matérielle du dispositif complémentaire N est supérieur ou égal au numéro de version minimale requise pour le niveau d'écart M , au sens de la loi d'ordre associée à la numérotation de version.

Après cette étape 300, le module de vérification 24A, 24B détermine, lors de l'étape 305, si d'autres tables de compatibilité sont à prendre en compte pour une nouvelle vérification. Ceci se produit par exemple dans le cas où le dispositif correspondant 12A, 12B, 12C, 12D comporte plusieurs tables distinctes de compatibilité 22A, 22B, 22C pour différentes fonctions matérielles et/ou logicielles, ces fonctions étant susceptibles d'être mises à jour indépendamment les unes des autres, ou encore dans le cas où le module de délégation 28 a transmis la table de compatibilité 22C au premier dispositif 12A, comme cela sera décrit par la suite en regard de la figure 6.

Si une autre table de compatibilité est présente, alors le module de vérification 24A, 24B retourne à l'étape 300 pour effectuer cette nouvelle vérification de version matérielle avec l'autre table.

Sinon, le module de vérification 24A, 24B passe à l'étape 310 au cours de laquelle il détermine si d'autres niveaux d'écart sont prévus, ou autrement dit si d'autres niveaux de compatibilité sont prévus.

S'il existe au moins un autre niveau d'écart, alors le module de vérification 24A, 24B retourne à l'étape 300 pour effectuer cette nouvelle vérification de version matérielle avec l'autre niveau d'écart.

Sinon, le module de vérification 24A, 24B passe à l'étape 320 au cours de laquelle il vérifie le numéro de version logicielle du dispositif complémentaire N, c'est-à-dire le numéro de version de la fonction logicielle du dispositif N, avec le numéro de version minimale requise pour un niveau d'écart M. Cette vérification consiste à déterminer si le numéro de version logicielle du dispositif complémentaire N est supérieur ou égal au numéro de version minimale requise pour le niveau d'écart M , au sens de la loi d'ordre associée à la numérotation de version.

Après cette étape 320, le module de vérification 24A, 24B détermine, lors de l'étape 325, si d'autres tables de compatibilité sont à prendre en compte pour une nouvelle vérification. Comme décrit précédemment, ceci se produit par exemple dans le cas où le module de délégation 28 a transmis la table de compatibilité 22C au premier dispositif 12A.

Si une autre table de compatibilité est présente, alors le module de vérification 24A, 24B retourne à l'étape 320 pour effectuer cette nouvelle vérification de version logicielle avec l'autre table.

Sinon, le module de vérification 24A, 24B passe à l'étape 330 au cours de laquelle il détermine si d'autres niveaux d'écart sont prévus, ou autrement dit si d'autres niveaux de compatibilité sont prévus.

S'il existe au moins un autre niveau d'écart, alors le module de vérification 24A, 24B retourne à l'étape 320 pour effectuer cette nouvelle vérification de version logicielle avec l'autre niveau d'écart. Sinon, l'étape de comparaison 215 correspondant à l'organigramme de la figure 4 est terminée.

Dans l'exemple de réalisation de la figure 5, chaque dispositif, à savoir le premier dispositif 12A, le deuxième dispositif 12B et le quatrième dispositif 12D, comporte son propre module de vérification 24A, 24B et est propre à effectuer lui-même sa propre vérification de compatibilité avec les autres dispositifs complémentaires du système 10. Le premier dispositif 12A vérifie alors, à l'aide de sa table de compatibilité 22A, d'une part, sa comptabilité avec le deuxième dispositif 12B (flèche F_{AB}), et d'autre part, avec le quatrième dispositif 12D (flèche F_{AD}). De manière analogue, le deuxième dispositif 12B vérifie, à l'aide de sa table de compatibilité 22B, d'une part, sa comptabilité avec le premier dispositif 12A (flèche F_{BA}), et d'autre part, avec le quatrième dispositif 12D (flèche F_{BD}). Enfin, le quatrième dispositif 12D vérifie, à l'aide de sa table de compatibilité, d'une part, sa comptabilité avec le premier dispositif 12A (flèche F_{DA}), et d'autre part, avec le deuxième dispositif 12B (flèche F_{DB}).

Dans l'exemple de réalisation de la figure 6, au moins un dispositif, à savoir le troisième dispositif 12C, ne comporte pas son propre module de vérification et est propre à déléguer au premier dispositif 12A, à l'aide de son module de délégation 28, la vérification de sa compatibilité avec les autres dispositifs complémentaires du système 10. A cet effet, le troisième dispositif 12C commence par transmettre le ou les numéros de version minimale requise contenus dans sa table de compatibilité 22C au premier dispositif 12A (flèche F'_{CA}). Le premier dispositif 12A vérifie alors, à l'aide de la table de compatibilité 22C reçue et pour le compte du troisième dispositif 12C, d'une part, la comptabilité dudit troisième dispositif 12C avec lui-même, i.e. le premier dispositif 12A (flèche F'_{AA}), et d'autre part, avec le deuxième dispositif 12B (flèche F'_{AB}). Le premier dispositif 12A renvoie ensuite au troisième dispositif 12C le ou les résultats des vérifications effectuées à l'aide de la table de compatibilité 22C reçue (flèche F'_{AC}).

Chaque dispositif 12A, 12B, 12C, 12D est en effet, de préférence, adapté pour stocker dans sa mémoire 18A, 18B, 18C les résultats des vérifications de compatibilité effectuées, que ces vérifications aient été effectuées directement par ledit dispositif ou bien indirectement par un autre dispositif via le mécanisme précité de délégation. Autrement dit, chaque dispositif 12A, 12B, 12C, 12D est de préférence adapté pour stocker dans sa mémoire 18A, 18B, 18C son éventuel indicateur unitaire d'écart.

À titre d'exemple, l'indicateur unitaire d'écart est positionné dans un état « alarmant » dès qu'au moins une incompatibilité entre le dispositif 12A, 12B, 12C, 12D correspondant et un dispositif complémentaire respectif est détectée, cette incompatibilité entraînant un fonctionnement seulement partiel d'au moins une fonction matérielle ou logicielle dudit dispositif 12A, 12B, 12C, 12D correspondant. L'indicateur unitaire d'écart est par exemple positionné dans un état « critique » dès qu'au moins une incompatibilité détectée entraîne le dysfonctionnement d'au moins une fonction matérielle ou logicielle dudit dispositif 12A, 12B, 12C, 12D correspondant. L'homme du métier comprendra bien entendu que d'autres valeurs d'état sont possibles pour l'indicateur unitaire d'écart, et également que les états « alarmant » et « critique » sont susceptibles d'être positionnés selon d'autres conditions.

Lorsqu'un dispositif correspondant 12A, 12B, 12C, 12D est incompatible avec un dispositif complémentaire respectif, l'indicateur global d'écart est calculé par le dispositif correspondant, tel que le premier dispositif 12A dans l'exemple de la figure 7. A cet effet, le premier dispositif 12A commence par récupérer l'éventuel indicateur unitaire d'écart du deuxième dispositif 12B (flèche G_{BA}), puis l'éventuel indicateur unitaire d'écart du troisième dispositif 12C (flèche G_{CA}), sachant que son propre éventuel indicateur unitaire d'écart est déjà stocké dans sa propre mémoire 18A. Le premier dispositif 12A calcule alors l'indicateur global d'écart (flèche G_{AA}) à l'aide des éventuels indicateurs unitaires d'écart récupérés et de son éventuel indicateur unitaire d'écart stocké dans sa mémoire 18A.

À titre d'exemple, l'indicateur global d'écart présente une priorité la plus élevée, également appelée priorité de rang 1, lorsqu'au moins un indicateur unitaire d'écart est dans l'état « critique » pour au moins une fonction matérielle. La priorité inférieure suivante, également appelée priorité de rang 2, de l'indicateur global d'écart correspond au cas où au moins un indicateur unitaire d'écart est dans l'état « critique » pour au moins une fonction logicielle, en l'absence d'indicateur unitaire d'écart dans l'état « critique » pour une fonction matérielle. La priorité inférieure suivante, également appelée priorité de rang 3, de l'indicateur global d'écart correspond au cas où au moins un indicateur unitaire d'écart est dans l'état « alarmant » pour au moins une fonction matérielle, en l'absence d'indicateur unitaire d'écart dans l'état « critique ». Enfin, la priorité la plus faible, également appelée priorité de rang 4, correspond au cas où au moins un indicateur unitaire d'écart est dans l'état « alarmant » pour au moins une fonction logicielle, en l'absence d'indicateur unitaire d'écart dans l'état « critique », ainsi qu'en l'absence d'indicateur unitaire d'écart dans l'état « alarmant » pour une fonction matérielle.

Le système 10 comprend alors une interface homme-machine, non représentée, pour alerter l'utilisateur en cas d'écart détecté, ou encore d'incompatibilité détectée. L'interface homme-machine comprend une diode électroluminescente, non représentée, agencée sur chaque dispositif 12A, 12B, 12C, 12D, et une loi par exemple basée sur un nombre d'éclairs lumineux de la diode électroluminescente permet alors d'indiquer à l'utilisateur le niveau d'écart détecté et le type associé de fonction parmi les fonctions matérielles et/ou logicielles.

A titre d'exemple, trois éclairs lumineux de la diode électroluminescente correspondent à un écart alarmant pour la fonction logicielle de base, trois éclairs lumineux de la diode correspondent à un écart alarmant pour la fonction matérielle, six éclairs lumineux correspondent à un écart critique pour la fonction logicielle de base et sept éclairs lumineux correspondent à un écart critique pour la fonction matérielle.

Le système électronique 10 et le procédé selon l'invention sont alors particulièrement autonomes de par la répartition des tables de compatibilité 22A, 22B, 22C dans les mémoires de chacun des dispositifs 12A, 12B, 12C, 12D. Aucun dispositif n'est alors obligatoire pour effectuer la vérification de compatibilité, contrairement au système de l'état de la technique où la vérification ne peut pas être effectuée en l'absence du dispositif maître. La vérification de compatibilité n'est également pas sensible à la déconnexion, c'est-à-dire au retrait, d'un dispositif du système, une conséquence étant que le dispositif retiré est neutralisé ou ignoré (étape 210 décrite précédemment) et que la vérification de compatibilité des autres dispositifs avec le dispositif retiré n'est plus effectuée. Si le dispositif retiré était incompatible avec un dispositif complémentaire, alors son éventuel indicateur unitaire d'écart est ignoré dans le calcul de l'indicateur global d'écart. En outre, tous les autres indicateurs unitaires d'écart sont recalculés puisque les éventuelles incompatibilités associées au dispositif retiré n'ont plus cours.

De manière analogue, la vérification de compatibilité est particulièrement évolutive lorsqu'un dispositif est ajouté dans le système 10, puisqu'il suffit que le dispositif ajouté effectue sa propre vérification de comptabilité avec les dispositifs complémentaires déjà présents dans le système 10, ceci à l'aide de sa table de compatibilité stockée dans sa mémoire.

Ainsi, l'architecture répartie de vérification de compatibilité selon l'invention permet d'offrir une bonne fiabilité sans coût supplémentaire et d'être peu sensible aux contraintes extérieures. Elle permet aussi d'être moins impactée par les choix de conception, étant donné que l'ajout d'un dispositif dans le système ou le retrait d'un dispositif du système est facilement géré de par la présence d'une table de compatibilité dans chaque dispositif 12A, 12B, 12C, 12D du système.

On conçoit alors que le système électronique 10 selon l'invention est un système plus évolutif dans lequel la vérification de compatibilité entre dispositifs 12A, 12B, 12C, 12D reste simple de mise en œuvre, même lors de l'ajout d'un nouveau dispositif dans le système 10.

## Revendications

1. Système électronique (10) comprenant un ensemble de dispositifs électroniques (12A, 12B, 12C, 12D), chaque dispositif électronique (12A, 12B, 12C, 12D) comportant une mémoire (18A, 18B, 18C) et un module (14A, 14B, 14C, 14D) de communication avec un ou plusieurs autres dispositifs de l'ensemble,
le système (10) comprenant :
- au moins un module (24A, 24B) de vérification de la compatibilité de chaque dispositif (12A, 12B, 12C, 12D) avec le ou les autres dispositifs complémentaires avec lesquels ledit dispositif (12A, 12B, 12C, 12D) est apte à communiquer,
- au moins un module (26A, 26B) de génération d'au moins un indicateur d'écart lorsqu'une incompatibilité entre deux dispositifs est détectée,
tel que la mémoire (18A, 18B, 18C) de chaque dispositif comprend au moins une table (22A, 22B, 22C) de compatibilité avec ledit ou lesdits autres dispositifs complémentaires, chaque table de compatibilité (22A, 22B, 22C) comportant au moins un numéro de version minimale requise pour chacun dudit ou desdits autres dispositifs complémentaires,
chaque module de vérification (24A, 24B) est adapté pour comparer, pour un ou plusieurs dispositifs donnés, un numéro de version de chacun dudit ou desdits autres dispositifs complémentaires avec le numéro de version minimale requise correspondant,
chaque module de vérification (24A, 24B) est intégré dans un dispositif électronique (12A, 12B, 12D) respectif, et
au moins un dispositif (12C) comporte un module (28) de délégation de la vérification de compatibilité à un autre dispositif (12A) comportant un module de vérification (24A), et le module de délégation (28) est adapté pour transmettre, audit module de vérification (24A), les numéros de version contenus dans la table de compatibilité (22C) du dispositif (12C) qui comporte ledit module de délégation (28).

2. Système (10) selon la revendication 1, dans lequel au moins un dispositif électronique (12A, 12B, 12C, 12D) comporte au moins une fonction matérielle, et la ou chaque table de compatibilité correspondante (22A, 22B, 22C) comporte, pour la ou chaque fonction matérielle, un numéro de version minimale requise pour chacun dudit ou desdits autres dispositifs complémentaires.

3. Système (10) selon la revendication 1 ou 2, dans lequel au moins un dispositif électronique (12A, 12B, 12C, 12D) comporte au moins une fonction logicielle, et la ou chaque table de compatibilité correspondante (22A, 22B, 22C) comporte, pour la ou chaque fonction logicielle, un numéro de version minimale requise pour chacun dudit ou desdits autres dispositifs complémentaires.

4. Système (10) selon l'une quelconque des revendications précédentes, dans lequel chaque module de génération (26A, 26B) est adapté pour générer un indicateur unitaire d'écart pour chaque dispositif ayant une incompatibilité avec au moins un autre dispositif complémentaire.

5. Système (10) selon l'une quelconque des revendications précédentes, dans lequel au moins un module de génération (26A, 26B) est adapté pour générer un indicateur global d'écart dès que deux dispositifs complémentaires sont incompatibles.

6. Système (10) selon l'une quelconque des revendications précédentes, dans lequel plusieurs niveaux de compatibilité sont associés à au moins un dispositif, et la ou chaque table de compatibilité correspondante (22A, 22B, 22C) comporte, pour chaque niveau de compatibilité, un numéro de version minimale requise pour chacun dudit ou desdits autres dispositifs complémentaires.

7. Disjoncteur électrique (8) comprenant une unité de déclenchement et un système électronique (10), tel que le système électronique (10) est conforme à l'une quelconque des revendications précédentes.

8. Procédé de génération d'au moins un indicateur d'écart pour un dispositif électronique (12A, 12B, 12C, 12D) lorsqu'une incompatibilité avec au moins un autre dispositif d'un système électronique est détectée, le système électronique (10) comprenant un ensemble de dispositifs électroniques (12A, 12B, 12C, 12D), chaque dispositif électronique (12A, 12B, 12C, 12D) comportant une mémoire (18A, 18B, 18C) et un module (14A, 14B, 14C, 14D) de communication avec un ou plusieurs autres dispositifs de l'ensemble,
le procédé comprenant les étapes suivantes :
- la vérification (100) de la compatibilité du dispositif avec le ou les autres dispositifs complémentaires avec lesquels ledit dispositif est apte à communiquer,
- la génération (110) d'au moins un indicateur d'écart pour le dispositif électronique lorsqu'une incompatibilité avec au moins un autre dispositif complémentaire est détectée,
tel que la mémoire de chaque dispositif comprend au moins une table (22A, 22B, 22C) de compatibilité avec ledit ou lesdits autres dispositifs complémentaires, chaque table de compatibilité (22A, 22B, 22C) comportant au moins un numéro de version minimale requise pour chacun dudit ou desdits autres dispositifs complémentaires, et
lors de l'étape de vérification (100), un numéro de version de chacun dudit ou desdits autres dispositifs complémentaires est comparé avec le numéro de version minimale requise correspondant,
chaque module de vérification (24A, 24B) est intégré dans un dispositif électronique (12A, 12B, 12D) respectif, et au moins un dispositif (12C) comporte un module (28) de délégation de la vérification de compatibilité à un autre dispositif (12A) comportant un module de vérification (24A), et
lors de l'étape de vérification (100), le module de délégation (28) transmet, audit module de vérification (24A), les numéros de version contenus dans la table de compatibilité (22C) du dispositif (12C) qui comporte ledit module de délégation (28).

9. Produit programme d'ordinateur comportant des instructions logicielles qui, lorsqu'elles sont exécutées par un ordinateur, mettent en œuvre un procédé de génération d'au moins un indicateur d'écart selon la revendication 8.

## Patentansprüche

1. Elektronisches System (10), welches eine Gruppe von elektronischen Vorrichtungen (12A, 12B, 12C, 12D) aufweist, wobei jede elektronische Vorrichtung (12A, 12B, 12C, 12D) einen Speicher (18A, 18B, 18C) und ein Modul (14A, 14B, 14C, 14D) zur Kommunikation mit einer oder mehreren anderen Vorrichtungen der Gruppe aufweist,
wobei das System (10) aufweist:
- mindestens ein Modul (24A, 24B) zum Verifizieren der Kompatibilität von jeder Vorrichtung (12A, 12B, 12C, 12D) mit der oder den anderen komplementären Vorrichtungen, mit welchen die besagte Vorrichtung (12A, 12B, 12C, 12D) zu kommunizieren imstande ist,
- mindestens ein Modul (26A, 26B) zum Erzeugen von mindestens einem Abweichungsanzeiger, wenn eine Inkompatibilität zwischen zwei Vorrichtungen detektiert wird,
derart, dass der Speicher (18A, 18B, 18C) von jeder Vorrichtung mindestens eine Tabelle (22A, 22B, 22C) der Kompatibilität mit der besagten oder den besagten anderen komplementären Vorrichtungen aufweist, wobei jede Kompatibilitätstabelle (22A, 22B, 22C) mindestens eine minimale erforderliche Versionsnummer für jede der besagten oder der besagten anderen komplementären Vorrichtungen aufweist,
wobei jedes Modul zum Verifizieren (24A, 24B) angepasst ist, um für eine oder mehrere gegebene Vorrichtungen eine Versionsnummer von jeder der besagten oder der besagten anderen komplementären Vorrichtungen mit der korrespondierenden minimalen erforderlichen Versionsnummer zu vergleichen,
wobei jedes Modul zum Verifizieren (24A, 24B) in einer jeweiligen elektronischen Vorrichtung (12A, 12B, 12D) integriert ist, und
wobei mindestens eine Vorrichtung (12C) ein Modul (28) zum Delegieren des Verifizierens der Kompatibilität zu einer anderen Vorrichtung (12A) aufweist, welche ein Modul zum Verifizieren (24A) aufweist, und das Modul zum Delegieren (28) angepasst ist, um zu dem besagten Modul zum Verifizieren (24A) die Versionsnummern zu übertragen, welche in der Kompatibilitätstabelle (22C) der Vorrichtung (12C) enthalten sind, welche das besagte Modul zum Delegieren (28) aufweist.

2. System (10) gemäß Anspruch 1, wobei die mindestens eine elektronische Vorrichtung (12A, 12B, 12C, 12D) mindestens eine Hardwarefunktion aufweist, und die oder jede korrespondierende Kompatibilitätstabelle (22A, 22B, 22C) für die oder jede Hardwarefunktion eine minimale erforderliche Versionsnummer für jede der besagten oder der besagten anderen komplementären Vorrichtungen aufweist.

3. System (10) gemäß Anspruch 1 oder 2, wobei die mindestens eine elektronische Vorrichtung (12A, 12B, 12C, 12D) mindestens eine Softwarefunktion aufweist, und die oder jede korrespondierende Kompatibilitätstabelle (22A, 22B, 22C) für die oder jede Softwarefunktion eine minimale erforderliche Versionsnummer für jede der besagten oder der besagten anderen komplementären Vorrichtungen aufweist.

4. System (10) gemäß irgendeinem der vorherigen Ansprüche, wobei jedes Modul zum Erzeugen (26A, 26B) angepasst ist, um einen unitären Abweichungsanzeiger für jede Vorrichtung zu erzeugen, welche eine Inkompatibilität mit mindestens einer anderen komplementären Vorrichtung hat.

5. System (10) gemäß irgendeinem der vorherigen Ansprüche, wobei mindestens ein Modul zum Erzeugen (26A, 26B) angepasst ist, um einen globalen Abweichungsanzeiger zu erzeugen, sobald zwei komplementäre Vorrichtungen inkompatibel sind.

6. System (10) gemäß irgendeinem der vorherigen Ansprüche, wobei mehrere Kompatibilitätsniveaus mindestens einer Vorrichtung zugeordnet sind, und die oder jede korrespondierende Kompatibilitätstabelle (22A, 22B, 22C) für jedes Kompatibilitätsniveau eine minimale erforderliche Versionsnummer für jede der besagten oder der besagten anderen komplementären Vorrichtungen aufweist.

7. Elektrischer Unterbrecher (8), welcher eine Einheit zum Ausschalten und ein elektronisches System (10) aufweist, derart, dass das elektronische System (10) irgendeinem der vorherigen Ansprüche entspricht.

8. Verfahren zum Erzeugen von mindestens einem Abweichungsanzeiger für eine elektronische Vorrichtung (12A, 12B, 12C, 12D), wenn eine Inkompatibilität mit mindestens einer anderen Vorrichtung eines elektronischen Systems detektiert wird, wobei das elektronische System (10) eine Gruppe von elektronischen Vorrichtungen (12A, 12B, 12C, 12D) aufweist, wobei jede elektronische Vorrichtung (12A, 12B, 12C, 12D) einen Speicher (18A, 18B, 18C) und ein Modul (14A, 14B, 14C, 14D) zur Kommunikation mit einer oder mehreren anderen Vorrichtungen der Gruppe aufweist,
wobei das Verfahren die folgenden Schritte aufweist:
- das Verifizieren (100) der Kompatibilität der Vorrichtung mit der oder den anderen komplementären Vorrichtungen, mit welchen die besagte Vorrichtung zu kommunizieren imstande ist,
- das Erzeugen (110) von mindestens einem Abweichungsanzeiger für die elektronische Vorrichtung, wenn eine Inkompatibilität mit mindestens einer anderen komplementären Vorrichtung detektiert wird,
derart, dass der Speicher von jeder Vorrichtung mindestens eine Tabelle (22A, 22B, 22C) der Kompatibilität mit der besagten oder den besagten anderen komplementären Vorrichtungen aufweist, wobei jede Kompatibilitätstabelle (22A, 22B, 22C) mindestens eine minimale erforderliche Versionsnummer für jede der besagten oder der besagten anderen komplementären Vorrichtungen aufweist, und
während des Schritts des Verifizierens (100) eine Versionsnummer von jeder der besagten oder der besagten anderen komplementären Vorrichtungen mit der korrespondierenden minimalen erforderlichen Versionsnummer verglichen wird,
wobei jedes Modul zum Verifizieren (24A, 24B) in einer jeweiligen elektronischen Vorrichtung (12A, 12B, 12D) integriert ist, und mindestens eine Vorrichtung (12C) ein Modul (28) zum Delegieren des Verifizierens der Kompatibilität zu einer anderen Vorrichtung (12A) aufweist, welche ein Modul zum Verifizieren (24A) aufweist, und
während des Schritts des Verifizierens (100) das Modul zum Delegieren (28) zu dem besagten Modul zum Verifizieren (24A) die Versionsnummern überträgt, welche in der Kompatibilitätstabelle (22C) der Vorrichtung (12C) enthalten sind, welche das besagte Modul zum Delegieren (28) aufweist.

9. Computerprogrammprodukt, welches die Softwareinformationen aufweist, welche, wenn sie mittels eines Computers ausgeführt werden, ein Verfahren zum Erzeugen von mindestens einem Abweichungsanzeiger gemäß Anspruch 8 durchführen.

## Claims

1. An electronic system (10) comprising a set of electronic devices (12A, 12B, 12C, 12D), each electronic device (12A, 12B, 12C, 12D) comprising a memory (18A, 18B, 18C) and a communication module (14A, 14B, 14C, 14D) for communicating with one or more other electronic devices of the set,
the electronic system (10) comprising:
- at least one verification module (24A, 24B) for verifying the compatibility of each electronic device (12A, 12B, 12C, 12D) with the other complementary electronic device(s) with which said electronic device (12A, 12B, 12C, 12D) is able to communicate,
- at least one generating module (26A, 26B) for generating at least one deviation indicator when an incompatibility is detected between two electronic devices,
wherein each memory (18A, 18B, 18C) of each electronic device comprises a compatibility table (22A, 22B, 22C) for defining compatibility with said other complementary electronic device(s), each compatibility table (22A, 22B, 22C) comprising at least one minimum required version number for each of said other complementary electronic device(s), and
each verification module (24A, 24B) is adapted for comparing, for one or more given electronic devices, a version number of each of said other complementary electronic device(s) with the corresponding minimum required version number,
each verification module (24A, 24B) is incorporated into a respective electronic device (12A, 12B, 12D), and
at least one device (12C) comprises a module (28) for delegating the compatibility verification to another electronic device (12A) comprising a verification module (24A), and the delegating module (28) is adapted for sending, to said verification module (24A), the version numbers contained in the compatibility table (22C) of the electronic device (12C) that comprises said delegating module (28).

2. The electronic system (10) according to claim 1, wherein at least one electronic device (12A, 12B, 12C, 12D) comprises at least one hardware function, and each corresponding compatibility table (22A, 22B, 22C) comprises, for each hardware function, a minimum required version number for each of the other complementary electronic device(s).

3. The electronic system (10) according to claim 1 or 2, wherein at least one electronic device (12A, 12B, 12C, 12D) comprises at least one software function, and each corresponding compatibility table (22A, 22B, 22C) comprises, for each software function, a minimum required version number for each of the other complementary electronic device(s).

4. The electronic system (10) according to any one of the preceding claims, wherein each generating module (26A, 26B) is adapted for generating a unitary deviation indicator for each electronic device having an incompatibility with at least one other complementary electronic device.

5. The electronic system (10) according to any one of the preceding claims, wherein at least one generating module (26A, 26B) is adapted for generating a global deviation indicator when two complementary electronic devices are incompatible.

6. The electronic system (10) according to any one of the preceding claims, wherein several compatibility levels are associated with at least one electronic device, and each corresponding compatibility table (22A, 22B, 22C) comprises, for each compatibility level, a minimum required version number for each of said other complementary electronic device(s).

7. An electric circuit breaker (8) comprising a triggering unit and an electronic system (10), wherein the electronic system (10) is according to any one of the preceding claims.

8. A method for generating at least one deviation indicator for an electronic device (12A, 12B, 12C, 12D) when an incompatibility with at least one other electronic device of an electronic system is detected, the electronic system (10) comprising a set of electronic devices (12A, 12B, 12C, 12D), each electronic device (12A, 12B, 12C, 12D) comprising a memory (18A, 18B, 18C) and a communication module (14A, 14B, 14C, 14D) for communicating with one or more other electronic devices of the set,
the method comprising the following steps:
- verifying (100) the compatibility of the electronic device with the other complementary electronic device(s) with which said electronic device is adapted to communicate,
- generating (110) at least one deviation indicator for the electronic device when an incompatibility with at least one other complementary electronic device is detected,
wherein the memory of each electronic device comprises at least one compatibility table (22A, 22B, 22C) for defining compatibility with said other complementary electronic device(s), each compatibility table (22A, 22B, 22C) comprising at least one minimum required version number for each of said other complementary electronic device(s), and
during the verification step (100), a version number for each of said other complementary electronic device(s) is compared with the corresponding minimum required version number,
each verification module (24A, 24B) is incorporated into a respective electronic device (12A, 12B, 12D), and at least one device (12C) comprises a module (28) for delegating the compatibility verification to another electronic device (12A) comprising a verification module (24A), and
during the verification step (100), the delegating module (28) sends, to said verification module (24A), the version numbers contained in the compatibility table (22C) of the electronic device (12C) that comprises said delegating module (28).

9. A computer program product comprising software instructions which, when run by a computer, carry out a method according to claim 8 for generating at least one deviation indicator.
